# EUROPEAN PATENT SPECIFICATION

(11) **EP 3 481 633 B1**
(45) Date of publication and mention of the grant of the patent: **02.09.2020**
(21) Application number: 17742861.2
(22) Date of filing: 05.07.2017
(51) Int. Cl.: B32B 43/00, B32B 7/06

(54) **APPARATUS AND METHOD FOR REMOVING PROTECTIVE FILM FROM SHEETS**
VORRICHTUNG UND VERFAHREN ZUM ENTFERNEN VON SCHUTZFOLIE VON BÖGEN
APPAREIL ET PROCÉDÉ POUR RETIRER DE FEUILLES UN FILM PROTECTEUR

(30) Priority: 07.07.2016 IT 201600070599
(43) Date of publication of application: 15.05.2019
(73) Proprietor: CEFLA Società Cooperativa, 40026 Imola (BO) (IT)
(72) Inventor: DAL SOGLIO, Lucio, 36015 Schio (VI) (IT); GUIDUZZI, Andrea Luca, 40026 Imola (BO) (IT)
(74) Representative: Karaghiosoff, Giorgio Alessandro
(86) International application number: PCT/IB2017/054053
(87) International publication number: WO 2018/007960

(56) References cited:
- KR-B1- 101 605 806
- US-A- 5 358 591

## Description

The present invention relates to an apparatus and a method for removing the protective film from sheets of polymeric material of different thickness.

Sheets of polymeric transparent materials are known, like Poly(methyl methacrylate) (PMMA), Polycarbonate (PC), Styrene-acrylonitrile resin (SAN), manufactured through extrusion/rolling and other similar processes. Indicatively, said sheets can have dimensions in the order of 1300 mm x 3100 mm, and a thickness of about 0.5 to 16 mm. Alternatively, said material can be rolled on reels, in that case having a thickness of 0.5 to 1.2 mm.

Said kinds of plastics are characteristically very prone to scratches. Therefore, when their manufacture is finished, they are covered with a protective transparent film. Any following working step requires the removal of said protective film.

A way to protect the surface from scratches is painting sheets after their production: the paint, which is subsequently cured, makes their surface more resistant to scratches.

When the protective film is removed, sheets electrostatically charge. This is a problem in that the electrostatic charge of sheets attracts contamination, which is a nuisance to the following painting process.

In order to prevent contamination problems, the removal of the protective film may be performed in an environment protected from dust (cleanroom, rooms with air filtration systems) so as to prevent the deposition of dust on sheets surface. Before painting, a cleaning step must be performed to remove superficial dust from sheets, e.g. through an adhesive roller.

In the known manufacturing plants, sheets are moved through an overhead conveyor, wherein sheets are conveyed while hanging vertically. The hands of human operators usually perform the removal of the protective film.

US5358591 of Amedeo Candore describes an apparatus and a method for removing the cover sheet from a dry film laminated on a board comprising the steps of:
a) moving a knurling device relatively to the board along and in contact with an edge of the dry film while pressing on the knurling device,
b) at the same time blowing a first stream of air, in following relation to the knurling device, against the edge of the dry film to separate in this area a portion of the cover sheet from the dry film, and
c) conveying the board to a sucking roll which upon touching the surface of the board starts to rotate whereby the said cover sheet portion, already separated in an area thereof from the dry film, is sucked by the sucking roll and with continued rotation of the sucking roll the cover sheet is removed in its entirety from the dry film.

KR101605806B1 of Jang Kyu Nam describes an apparatus for removing a protective film working in a way similar to that described in US5358591.

A drawback of the known art is the fact that film removal must be performed by hand, with ensuing costs. Another drawback is that the operator her/himself can contribute to sheet contamination through materials coming from her/his body like e.g. hair, dandruff, fluff, etc.

Aim of the present invention is providing an apparatus and a method for the removal of protective film from sheets, preventing the above-quoted drawbacks.

This object is achieved by an apparatus and a method having the features of the independent claims. Advantageous embodiments and refinements are specified in claims dependent thereon.

The system according to the present invention comprises:
- An incising group for incising an end strip in a sheet covered with a protective film, at least for a portion of the thickness of the sheet itself, said incision occuring on the sheet side opposed to that covered by protective film;
- A vacuum belt conveyor for blocking said sheets and for conveying them to the different stations for the performing of the various the steps of film removal;
- A group for grabbing, detaching and removing the end strip from the remaining part of sheet; said strip was previously incised at least partly in the thickness of the sheet;
- A cutting group for cutting the protective film adherent to said end strip separated from the sheet, from the protective film associated with the remaining part of the sheet;
- A pliers-winding group for grabbing the initial portion of the film removed from a single sheet downstream the cutting line of said cutting group, for detaching the film from said sheet and for winding the film removed from a single sheet in a roll;
- A group extracting the sheet strip and the film that covered a whole, single sheet.

The method according to the present invention comprises the following steps:
- An incising group incises a strip as long as the width of said sheet, and wide about 1 cm; the incision occurs from bottom to top, without detachment of said strip; indicatively, said strip clings to its sheet of origin for about a thickness of 0,1 mm;
- Said sheet, covered by protective film, is deposited on a belt vacuum conveyor, so that said sheet is not simply resting on it, but the sheet is integral with the belt; said sheet rests on said belt conveyor so that the protective film is on its upper (free) side;
- A pliers grabs and detaches the strip from its sheet of origin; said detachment occurs so that the protective film clings to the strip, working as primer for detachment;
- A cutter cuts the protective film just downstream the strip, separating on one side the strip with its small part of film, and on the other side the main length of the film; the strip falls into a suitable container;
- A winding maker rolls the whole protective film of a single sheet, while it is removed during the advancing of the sheet;
- The film removed from a single sheet, now in the form of a roll, is extracted from the winding maker through two extracting rolls and falls in a container for processing residues; possibly the film is forwarded to a destruction device (chipper).

Once all the protective film has been removed, the sheet can proceed to subsequent working steps (painting).

A first advantage of the present invention consists in the automation of an operation so far performed by hand, with reduced cost with respect to hand working. The automation of film removal shortens the working time and makes the working time more stable and foreseeable.

A second advantage of the present invention is the absence of a human operator who could contaminate the electrostatically charged sheet with hair, dust, dandruff, fluff coming from clothes, etc. coming from her/his body.

Further advantages and properties of the present invention are disclosed in the following description, in which exemplary embodiments of the present invention are explained in detail on the basis of the drawings:
- Figure 1: Production line, top view;
- Figure 2: Apparatus for removing protecting film, axonometric view;
- Figure 3: Details of the apparatus showing the incising group, axonometric view;
- Figure 3A: Detail of the incising group, axonometric view;
- Figure 3B: Lateral section of the incising group;
- Figure 4: Details of the apparatus showing the group for film detachment;
- Figure 4A: Lateral section of the group for film detachment;
- Figure 4B: Lateral section of the group for film detachment, wherein protective film can be observed;
- Figure 4C: Detail of a lateral section of the group for film detachment, wherein a sheet freed from protective film is observable; said protective film is rolled around the grabbing group;
- Figure 4D: Detail showing the detachment of a protective film roll from the grabbing group, top view.

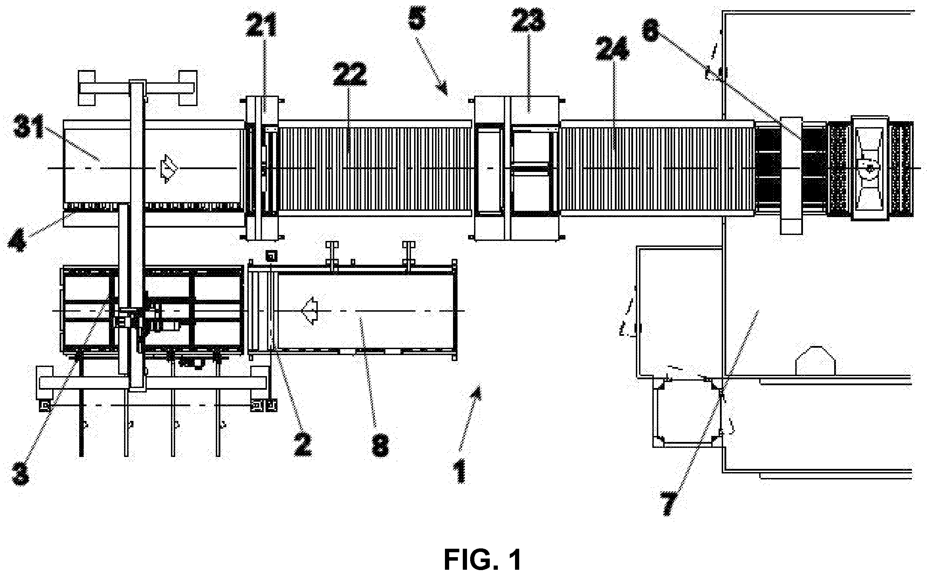

Figure 1 shows a production line 1 from top. A stack 8 of sheets, each covered with its protective film, is loaded on a roller conveyor 2. The stack 8 of sheets advances and a suction loader 3 picks up a single sheet 31 from the stack, depositing said sheet 31 on the roller conveyor 4. The roller conveyor 4 supplies an apparatus 5 for the removal of protective film.

After passing through the apparatus 5 for removing protective film, the single sheet advances to the painting and drying line 6, placed inside a pressure cabin 7.

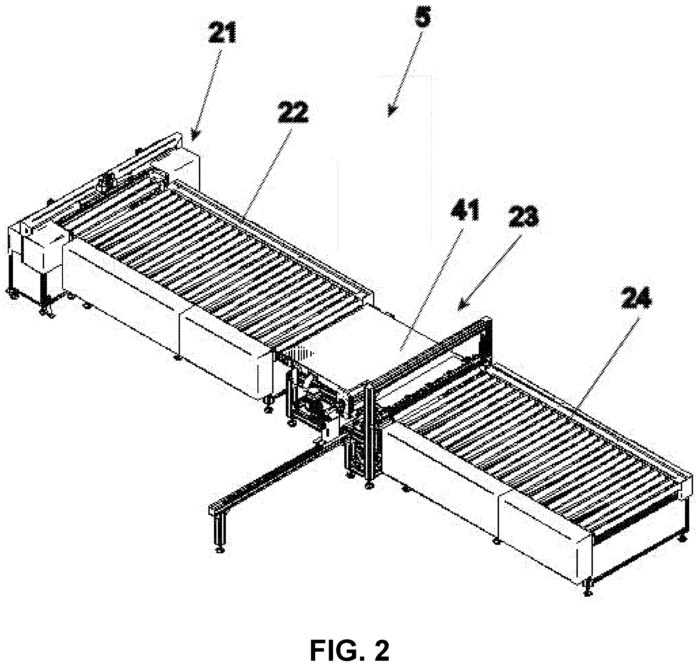

Figure 2 shows the apparatus 5 for removing the protective film comprising four elements:
- An incising group 21 for incising a sheet strip;
- A first, preferably motorized, roller conveyor, for conveying the sheet from which the strip was incised;
- A group 23 for detaching the protective film;
- A second, preferably motorized, roller 24 conveyor for conveying the sheet now free from protective film to the subsequent painting line 6.

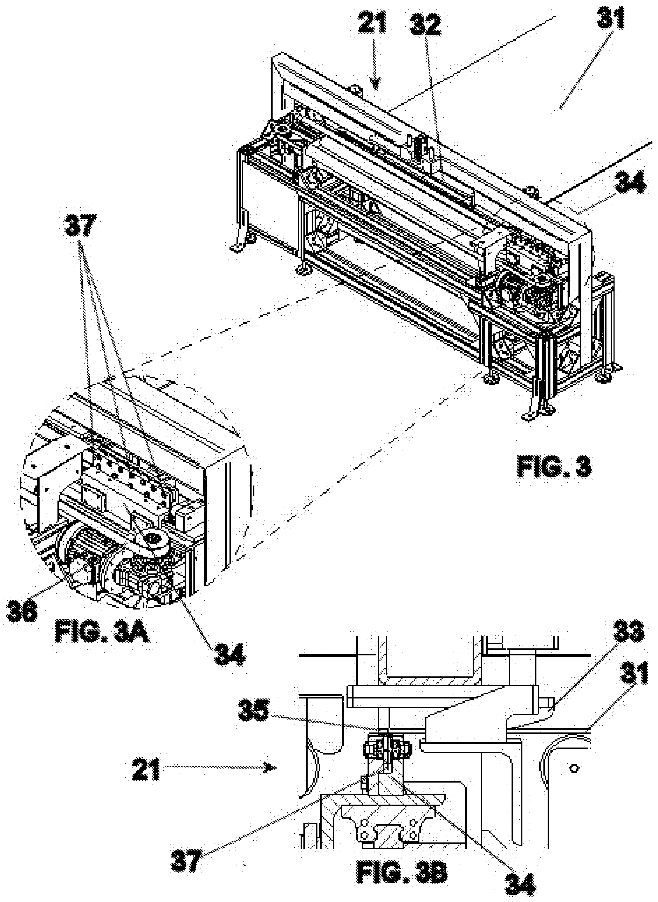

Figure 3 shows a detail of the incising station for a sheet 31. A sheet 31 enters into the incising station and is stopped by a mobile stopper 32. Said sheet 31 is stopped by a mobile stop 32. Said sheet 31 is then blocked by a holding device 33. A blade group 34 incises an end strip 35. The strip 35 is not cut over its whole thickness, but the incision occurs so that the strip 35 clings to the sheet 31 for about a tenth of mm. E.g., when the sheet is 10 mm thick, the incision will be 9,9 mm deep. Indicatively, the incised strip 35 is 10 mm wide, and has a length equal to the width of the sheet 31. The incision occurs on the main side of the sheet 31 opposed to that on which the film is adhering.

Figure 3A shows a detail of the blade group 34. It comprises a series of rotating blades 37, which are placed tapering on the sides of a triangle, so that the central rotating blade is higher than the adjacent ones. The central rotating blade is the one deeper incising the strip, up to a tenth from sheet surface. The blade group 34 is symmetrically designed, so that the incision can be performed in the same way both incising from left to right and from right to left; therefore the blade group needs no repositioning after an incision.

The blade group 34 is motorized through a toothed belt 36 and slides on a double skate transversally with respect to the direction of forward motion of sheet 31, for the whole width of the sheet itself.

Figure 3B shows a lateral section of the group 21 for incising the strip. The sheet 31 is held by a pair of holding devices 33, and is incised by the blade group 34. The figure shows the highest rotating blade 37, which does not get to the surface of the sheet 31, allowing to the strip 35 to temporarily cling to the sheet 31.

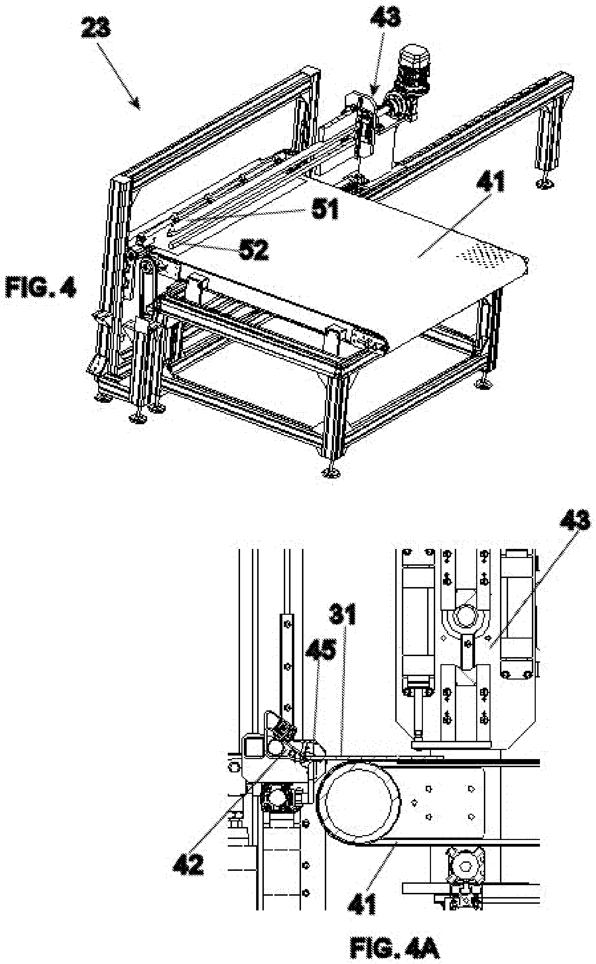

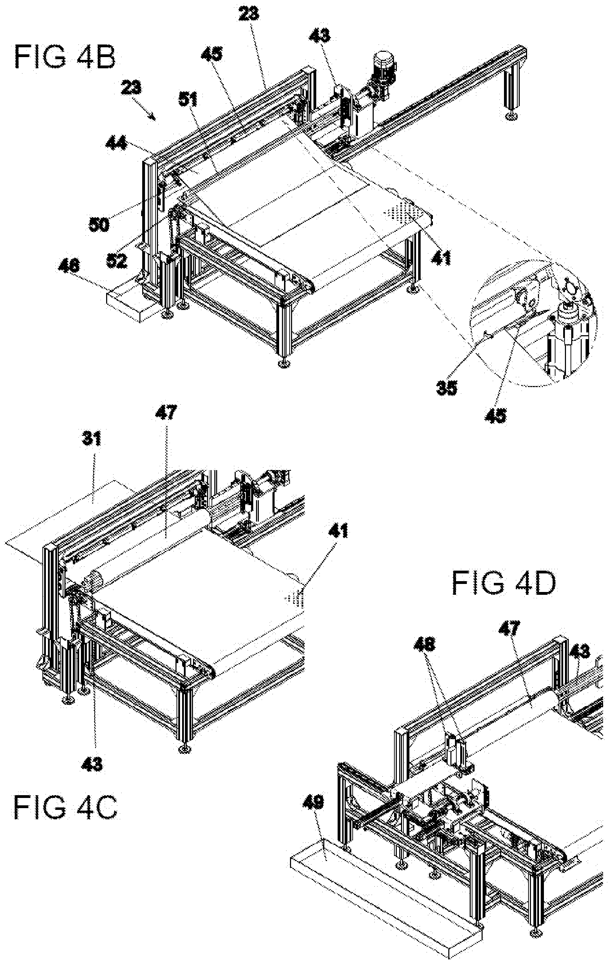

Figure 4 shows an axonometric view of the group 23 for detaching the end strip 35, wherein a vacuum belt conveyor 41, creating a depression, allows to convey the sheet 31 blocking it on the surface of the belt 41 itself.

Figure 4A shows a lateral section of a detail of Figure 4, wherein a pliers 42 intended to grab the end strip 35 is shown. In this figure the protective film is not visible.

Figure 4B shows a lateral section of the group 23 for detaching the end strip, too, in a moment following that shown in Figure 4A. The pliers 42 grabbed the strip 35, lifted it of about 150-200 mm with respect to the surface of belt 41 and rotated it of about 150°. This movement caused the rupture of the bridge of material connecting the strip 35 to the remaining portion of the sheet 31, and the detachment of strip 35 from sheet 31, visible in Figure 4B.

Now a grabbing group 43 blocks the protective film 44 while a blade 45 cuts the film 44 immediately downstream the strip 35, with reference to the advancing direction of the sheet on the vacuum belt conveyor. The pliers 42 opens and drops the strip 35, still with its corresponding part of adhering film 44, in an underlying collection container 46.

The grabbing group 43 comprises two rod-like elements 51 and 52 (see Figure 4), which extend for at least a portion of protective film width, leaving free a lateral longitudinal side of the film itself. The two rod-like elements are displaceable in their approaching/distancing direction, and are rotatable as a whole around a common axis of rotation, which is parallel to their longitudinal extension. In this way, the initial portion of protective film lifted from sheet 31 is grabbed between the two rod-like elements 51 and 52, which are approached to each other so as to grab the film 44, while a rotation of the two rod-like elements winds the film up while it is detached from the sheet, forming a roll 47. While they rotate, the two rod-like elements distance themselves, so that once the roll 47 is finished, their approaching causes the disengaging of the roll from the two rod-like elements and the possibility of extracting said roll from the two rod-like elements.

During the winding up step, the grabbing group 43 expands and starts to rotate around its axis at the same time with the movement forward of the sheet 31 towards the following station 6.

In a preferred embodiment, during this step a blower group 50 blows air helping the detachment of film 44 from sheet 31.

The film 44 is winded up forming a roll 47 up to the complete detachment of the film 44 from the sheet 31. This step is shown in Figure 4C.

In correspondence of a head end of the roll 47, a terminal portion protrudes with respect to the corresponding end of the grabbing group 43.

The roll 47 is grabbed by two extracting rollers 48 on the free side of the group 43; the two rod-like elements 51 and 52 approach to each other, decreasing the diameter of the grabbing group 43 and freeing the roll 47. Two extracting rollers 48, rotating in opposite directions, extract the film roller 47 from the grabbing group 43 until the roller drops in a suitable collecting container 49. This step is shown in Figure 4D.

The sheet 31, free from the protective film, is forwarded to the following station 6 for painting, passing on conveyor 24.

In an embodiment, the movement of said sheet 31 is not continuous and unidirectional, but the sheet advances, stops and moves back for about 600 mm when said grabbing group starts its rotation for the removal of the protective film.

Tests performed in factory showed that the interruption of the sheet movement causes the depositing of micro-impurities, which subsequently lead to defects appearing in the sheet that underwent painting.

In a particularly preferred embodiment, the movement of sheet 31 was modified so as to make it continuous during the whole step of protective film removal, with a continuous traction of said protective film 44. In particular, the protective film 44 removed from the sheet never re-enters into contact with the sheet from which it was removed.
- 1: production line
- 2: roller conveyor
- 3: suction loader
- 4: roller conveyor
- 5: apparatus for the removal of protective film
- 6: painting line
- 7: pressure cabin
- 21: incising group
- 22: first motorized roller conveyor
- 23: group for film detachment
- 24: second motorized roller conveyor
- 31: sheet
- 32: mobile stop
- 33: holding device
- 34: blade group
- 35: strip
- 37: rotating blades
- 41: vacuum belt conveyor
- 42: pliers
- 43: grabbing group
- 44: protective film
- 45: blade
- 46: strip collecting container
- 47: roller
- 48: extracting roller
- 49: film collecting container
- 50: blower
- 51: first rod-like element
- 52: second rod-like element

## Claims

1. Apparatus (5) for removing protective film (44) from sheets (31) **characterized in that** it comprises:
- A group (21) for incising an end strip (35) in a sheet (31), for at least a portion of its thickness, said incision occurring on the sheet side opposed to that covered by protective film;
- A vacuum belt conveyor (41) for blocking said sheets (31) and moving them among the different stations for the performance of the different steps of film (44) removal;
- A group (23) for grabbing, detaching and removing said end strip (35) from the remaining portion of sheet (31);
- A group (45) for cutting said film adhering to said strip (35) separated from the protective film associated with the remaining portion of sheet (31);
- A grabbing group (43) for grabbing the initial part of the film (44) removed from a single sheet (31) downstream the cutting line of said cutting group, for detaching the film from said sheet (31) and for winding the film (44) removed from a single sheet (31) in a roll (47);
- An extracting group (48) of the film roller (47) which covered a whole sheet (31).

2. Apparatus (5) for removing protective film (44) from sheets (31) according to claim 1, wherein the incising group (21) comprises a blade group (34) in its turn comprising a plurality of tapered rotating blades (37) for incising a strip (35) from the sheet (31); the incision occurring while the sheet (31) is blocked by a holding device (33) and thanks to the translation of said incising group in the direction of sheet (31) width.

3. Apparatus (5) for removing protective film (44) from sheets (31) according to claim 2, wherein said rotating blades (37) are positioned on the sides of a triangle, with the central blade protruding more than the adjacent blades toward the sheet to be incised.

4. Apparatus (5) for removing protective film (44) from sheets (31) according to claim 1, wherein film-detaching group (23) comprises a vacuum belt conveyor (41) blocking the sheet (31); a pliers (42) grabbing and detaching the pre-incised strip (35) from the sheet (31); a grabbing group (43) blocking film (44) along a transversal line of said film interposed between the detached strip (35) and the remaining part of the sheet (31) and coinciding with a band of film detached from sheet (31); a blade (45) for cutting protective film (44) between said grabbing group (43) and said strip (35); said grabbing group (43) also winding said protective film (44) up to the formation of a roller (47).

5. Apparatus (5) for removing protective film (44) from sheets (31) according to claim 4, wherein film-detaching group (23) comprises a blowing group (50) blowing air between the sheet (31) and the film (44) with the aim of facilitating the detachment of film itself from sheet.

6. Apparatus (5) for removing protective film (44) from sheets (31) according to one of the preceding claims, wherein two collecting containers are present: a first container (46) for collecting strips (35) and a second container (49) for collecting film rollers (47) removed from sheets.

7. Method for removing protective film (44) from sheets (31) making use of the apparatus according to claims 1-6,
**characterized in that it** comprises the following steps:
- A sheet (31) is conveyed into an incising group (21); inside said group said sheet is incised on its side opposed to the side covered with protective film (44) for its whole width with an incision leaving an end strip (35) having a negligible width with respect to the overall length of the sheet (31);
- The pre-incised sheet (31) is conveyed through a first conveying roller (22) to the group (23) for detaching the film;
- The sheet (31) inside the group (23) is blocked by a vacuum belt conveyor (41); a pliers (42) detaches the pre-incised strip (35) from the sheet (31) grabbing said strip, lifting and rotating it with respect to the remaining part of said sheet;
- The film (44), which for an initial band is now stretched between said strip (35) and said sheet (31) through the action of a grabbing group (43) is cut by a blade (45) along a line downstream the strip side oriented towards the remaining part of sheet and interposed between said side of strip (35) and a transversal line for grabbing film (44);
- Said strip (35) is dropped in a collecting container (46);
- Said film (44), held by grabbing group (43) is progressively detached and winded around said grabbing group forming a roller (47), which is then dropped into a second collecting container (49).

8. Method for removing protective film (44) from sheets (31) according to claim 7, wherein said film roller (47) detached from sheet (31) is removed from said grabbing group (43) through axial extraction of said roller.

9. Method for removing protective film (44) from sheets (31) according to claim 8, wherein said grabbing group (43) has the dual task of holding the film (44) for cutting, and of working as rolling core for film roller (47), thanks to the fact that its two rod-like elements (51, 52) can distance/approach to each other, increasing and decreasing the diameter of said grabbing group; the removal of the film roller (47) from grabbing group (43) occurring through the action of two extracting rollers (48) working on film roller (47) while the diameter of the grabbing group (43) is minimal.

10. Method for removing protective film (44) from sheets (31) according to claims 7 to 9, wherein inside detachment group (23) there is a blower group (50), which blowing air between said sheet (31) and said protective film (44) facilitates the detachment of the film from the sheet.

11. Method for the removal of protective film (44) from sheets (31) according to one of the claims 7-9, wherein the forward movement of said sheet (31) during the protective film removal is continuous.

## Patentansprüche

1. Vorrichtung (5) zum Entfernen einer Schutzfolie (44) von Platten (31), **dadurch gekennzeichnet, dass** sie folgendes umfasst:
- eine Gruppe (21) zum Einschneiden eines Endstreifens (35) in einer Platte (31) in wenigstens einem Teil ihrer Dicke, wobei der Einschnitt auf der der Schutzfolie gegenüberliegenden Plattenseite erfolgt;
- ein Vakuumbandförderer (41) zum Blockieren der Platten (31) und Bewegen derselben zwischen den verschiedenen Stationen zum Durchführen der verschiedenen Schritte des Entfernens der Folie (44);
- eine Gruppe (23) zum Ergreifen, Lösen und Entfernen des Endstreifens (35) von dem verbleibenden Abschnitt der Platte (31);
- eine Gruppe (45) zum Schneiden der Folie, die an dem Streifen (35) haftet, welcher von der Schutzfolie getrennt ist, die mit dem verbleibenden Abschnitt der Platte (31) verbunden ist;
- eine Greifergruppe (43) zum Ergreifen des Anfangsabschnittes der Folie (44), die von einer Einzelplatte (31) stromabwärts der Schneidlinie der Schneidgruppe entfernt wurde, zum Ablösen der Folie von der Platte (31) und zum Aufwickeln in Form einer Rolle (47) der Folie (44), die von einer Einzelplatte (31) entfernt wurde;
- eine Abzugsgruppe (48) der Folienrolle (47), die eine ganze Platte (31) bedeckt.

2. Vorrichtung (5) zum Entfernen einer Schutzfolie (44) von Platten (31) nach Anspruch 1, wobei die Einschneidegruppe (21) eine Messergruppe (34) umfasst, die ihrerseits eine Vielzahl von sich verjüngenden rotierenden Messern (37) zum Einschneiden eines Streifens (35) von der Platte (31) umfasst; wobei der Einschnitt während des Blockierens der Platte (31) durch eine Haltevorrichtung (33) und der Verschiebung der Einschneidegruppe in der Richtung der Plattenbreite (31) gebildet wird.

3. Vorrichtung (5) zum Entfernen einer Schutzfolie (44) von Platten (31) nach Anspruch 2, wobei die rotierenden Messer (37) auf den Seiten eines Dreiecks positioniert sind, wobei das zentrale Messer mehr als die benachbarten Messer in Richtung auf das zu einschneidende Blatt vorsteht.

4. Vorrichtung (5) zum Entfernen einer Schutzfolie (44) von Platten (31) nach Anspruch 1, wobei die Folienablösegruppe (23) einen die Folie (31) blockierenden Vakuumbandförderer (41); eine Zange (42) zum Ergreifen und Lösen des voreingeschnittenen Streifens (35) von der Platte (31); eine Greifergruppe (43), die die Folie (44) entlang einer Querlinie der Folie blockiert, die zwischen dem abgelösten Streifen (35) und dem verbleibenden Abschnitt der Platte (3 1) angeordnet ist und mit einem von der Platte (31) abgelösten Folienband zusammenfällt; ein Messer (45) zum Schneiden der Schutzfolie (44) zwischen der Greifergruppe (43) und dem Streifen (35), wobei die Greifergruppe (43) auch die Schutzfolie (44) bis zur Bildung einer Rolle (47) aufwickelt, umfasst.

5. Vorrichtung (5) zum Entfernen einer Schutzfolie (44) von Platten (31) nach Anspruch 4, wobei die Folienablösegruppe (23) eine Blasgruppe (50) umfasst, die Luft zwischen der Platte (31) und der Folie (44) bläst, um das Ablösen der Folie von der Platte zu erleichtern.

6. Vorrichtung (5) zum Entfernen einer Schutzfolie (44) von Platten (31) nach einem der vorhergehenden Ansprüche, wobei zwei Sammelbehälter vorhanden sind: einen ersten Behälter (46) zum Sammeln von Streifen (35) und einen zweiten Behälter (49) zum Sammeln von aus den Platten entnommenen Folienrollen (47).

7. Verfahren zum Entfernen einer Schutzfolie (44) von Platten (31) unter Verwendung der Vorrichtung nach den Ansprüchen 1 bis 6, **dadurch gekennzeichnet, dass** es folgende Schritte umfasst:
- Fördern der Platte (31) in eine Einschneidegruppe (21); Einschneiden der Platte innerhalb dieser Gruppe auf ihrer der mit Schutzfolie (44) bedeckten Seite gegenüberliegenden Seite über ihre gesamte Breite mit einem Einschnitt, der einen Endstreifen (35) mit einer vernachlässigbaren Breite bezüglich der Gesamtlänge der Platte (31) hinterlässt;
- Fördern der voreingeschnittenen Platte (31) durch eine erste Förderrolle (22) zur Gruppe (23) zum Lösen der Folie;
- Blockieren der Platte (31) innerhalb der Gruppe (23) durch einen Vakuumbandförderer (41); , Ablösen des voreingeschnittenen Streifens (35) von der Platte (31) durch eine Zange (42), die den Streifen relativ zum verbleibenden Abschnitt der Platte ergreift, anhebt und dreht;
- Schneiden der Folie (44), die in einem Anfangsband nun zwischen dem Streifen (35) und der Platte (31) durch die Wirkung einer Greifergruppe (43) gedehnt wird, durch ein Messer (45) entlang einer Linie stromabwärts der dem verbleibenden Abschnitt der Platte zugewandten Streifenseite, die zwischen dieser Streifenseite (35) und einer Querlinie zum Ergreifen der Folie (44) angeordnet ist;
- Fallenlassen des Streifens (35) in einen Sammelbehälter (46);
- fortschreitende Ablösung und Aufwickeln der von der Greifergruppe (43) gehaltene Folie (44) um die Greifergruppe, eine Rolle (47) bildend, die schließlich in einen zweiten Sammelbehälter (49) fällt.

8. Verfahren zum Entfernen einer Schutzfolie (44) von Platten (31) nach Anspruch 7, wobei die Folienrolle (47), die von der Platte (31) gelöst wird, von der Greifergruppe (43) durch axiales Herausziehen der Rolle entfernt wird.

9. Verfahren zum Entfernen einer Schutzfolie (44) von Platten (31) nach Anspruch 8, wobei die Greifergruppe (43) die doppelte Aufgabe hat, die Folie (44) zum Schneiden zu halten, und als Rollkern für die Folienrolle (47) zu wirken, dank der Tatsache, dass ihre beiden stangenartigen Elemente (51, 52) sich voneinander weg/zueinander hin bewegen und dabei den Durchmesser der Greifergruppe vergrössern und verkleinern können; wobei das Entfernen der Folienrolle (47) von der Greifergruppe (43) durch die Wirkung von zweier auf die Folienrolle (47) wirkenden Abzugsrollen (48) bei minimalen Durchmesser der Greifergruppe (43) erfolgt.

10. Verfahren zum Entfernen einer Schutzfolie (44) von Platten (31) nach den Ansprüchen 7 bis 9, wobei innerhalb der Ablösegruppe (23) eine Blasgruppe (50) vorhanden ist, wobei die zwischen der Platte (31) und der Schutzfolie (44) geblasene Luft das Ablösen der Folie von der Platte erleichtert.

11. Verfahren zum Entfernen einer Schutzfolie (44) von Platten (31) nach einem der Ansprüche 7 bis 9, wobei die Vorwärtsbewegung der Platte (31) während der Schutzfolienentfernung kontinuierlich ist.

## Revendications

1. Appareil (5) pour enlever le film protecteur (44) des feuilles (31) **caractérisé en ce que** il comprend:
- Un groupe (21) pour inciser une bande d'extrémité (35) dans une feuille (31), sur au moins une partie de son épaisseur, ladite incision se produisant sur le côté de la feuille opposé à celui recouvert par le film protecteur;
- Un convoyeur à bande sous vide (41) pour bloquer lesdites feuilles (31) et les déplacer entre les différentes stations pour l'exécution des différentes étapes de l'enlèvement du film (44);
- Un groupe (23) pour saisir, détacher et enlever ladite bande d'extrémité (35) de la partie restante de la feuille (31);
- Un groupe (45) pour couper ledit film adhérant à ladite bande (35) séparée du film protecteur associé à la partie restante de la feuille (31);
- Un groupe de préhension (43) pour saisir la partie initiale du film (44) enlevé d'une seule feuille (31) en aval de la ligne de coupe dudit groupe de coupe, pour détacher le film de ladite feuille (31) et pour enrouler le film (44) enlevé d'une seule feuille (31) en un rouleau (47);
- Un groupe d'extraction (48) du rouleau (47) du film qui recouvrait une feuille entière (31).

2. Appareil (5) pour enlever un film protecteur (44) de feuilles (31) selon la revendication 1 dans lequel le groupe d'incision (21) comprend un groupe de lames (34) comprenant à son tour une pluralité de lames rotatives coniques (37) pour inciser une bande (35) de la feuille (31); l'incision se produisant alors que la feuille (31) est bloquée par un dispositif de retenue (33) et grâce à la translation dudit groupe d'incision dans la direction de la largeur de la feuille (31).

3. Appareil (5) pour enlever un film protecteur (44) de feuilles (31) selon la revendication 2 dans lequel lesdites lames rotatives (37) sont positionnées sur les côtés d'un triangle, la lame centrale faisant saillie plus que les lames adjacentes vers la feuille à inciser.

4. Appareil (5) pour enlever un film protecteur (44) de feuilles (31) selon la revendication 1, dans lequel le groupe (23) de détachement du film comprend un convoyeur à bande sous vide (41) bloquant la feuille (31); une pince (42) saisissant et détachant la bande préincisée (35) de la feuille (31); un groupe de préhension (43) bloquant le film (44) le long d'une ligne transversale dudit film interposée entre la bande détachée (35) et la partie restante de la feuille (31) et coïncidant avec une bande de film détachée de la feuille (31); une lame (45) pour couper le film protecteur (44) entre ledit groupe de préhension (43) et ladite bande (35); ledit groupe de préhension (43) enroulant également ledit film protecteur (44) jusqu'à la formation d'un rouleau (47).

5. Appareil (5) pour enlever un film protecteur (44) de feuilles (31) selon la revendication 4, dans lequel le groupe (23) de détachement de film comprend un groupe de soufflage (50) soufflant de l'air entre la feuille (31) et le film (44) dans le but de faciliter le détachement du film lui-même de la feuille.

6. Appareil (5) pour enlever le film protecteur (44) de feuilles (31) selon l'une des revendications précédentes, dans lequel sont présents deux récipients de collecte: un premier récipient (46) pour collecter les bandes (35) et un second récipient (49) pour collecter les rouleaux (47) de film enlevés des feuilles.

7. Méthode pour enlever le film protecteur (44) des feuilles (31) en utilisant l'appareil selon les revendications 1-6,
**caractérisé en ce que** elle comprend les étapes suivantes:
- Une feuille (31) est transportée dans un groupe d'incision (21); à l'intérieur dudit groupe, ladite feuille est incisée sur son côté opposé au côté recouvert de film protecteur (44) sur toute sa largeur avec une incision laissant une bande d'extrémité (35) ayant une largeur négligeable par rapport à la longueur totale de la feuille (31);
- La feuille préincisée (31) est transportée par un premier rouleau de transport (22) vers le groupe (23) pour le détachement du film;
- La feuille (31) à l'intérieur du groupe (23) est bloquée par un convoyeur à bande sous vide (41); une pince (42) détache la bande préincisée (35) de la feuille (31) en saisissant ladite bande, en la soulevant et en la faisant tourner par rapport à la partie restante de ladite feuille;
- Le film (44), qui pour une première tranche est maintenant tendu entre ladite bande (35) et ladite feuille (31) par l'action d'un groupe de préhension (43) est coupé par une lame (45) le long d'une ligne en aval du côté de la bande orienté vers la partie restante de la feuille et interposée entre ledit côté de la bande (35) et une ligne transversale de préhension du film (44);
- Ladite bande (35) est déposée dans un récipient de collecte (46);
- Ledit film (44), tenu par un groupe de préhension (43), est progressivement détaché et enroulé autour dudit groupe de préhension formant ainsi un rouleau (47), qui est ensuite déposé dans un second récipient de collecte (49).

8. Méthode pour enlever un film protecteur (44) de feuilles (31) selon la revendication 7, dans laquelle ledit rouleau (47) du film détaché de la feuille (31) est enlevé dudit groupe de préhension (43) par extraction axiale dudit rouleau.

9. Méthode pour enlever un film protecteur (44) de feuilles (31) selon la revendication 8, dans laquelle ledit groupe de préhension (43) a la double tâche de tenir le film (44) pour la coupe, et de fonctionner comme noyau de roulement pour le rouleau (47) du film, grâce au fait que ses deux éléments en forme de tige (51, 52) peuvent s'écarter/approcher l'un de l'autre, augmentant et diminuant le diamètre dudit groupe de préhension; l'enlèvement du rouleau (47) du film du groupe de préhension (43) se produisant par l'action de deux rouleaux d'extraction (48) travaillant sur le rouleau (47) du film alors que le diamètre du groupe de préhension (43) est minimal.

10. Méthode pour enlever un film protecteur (44) de feuilles (31) selon les revendications 7 à 9, dans laquelle à l'intérieur du groupe de détachement (23) se trouve un groupe de soufflage (50) qui en soufflant de l'air entre ladite feuille (31) et ledit film protecteur (44) facilite le détachement du film de la feuille.

11. Méthode pour l'enlèvement de film protecteur (44) de feuilles (31) selon l'une des revendications 7-9, dans laquelle le mouvement en avant de ladite feuille (31) pendant l'enlèvement du film protecteur est continu.
